# EUROPÄISCHE PATENTSCHRIFT

(11) **EP 2 366 287 B1**
(45) Veröffentlichungstag und Bekanntmachung des Hinweises auf die Patenterteilung: **26.03.2014**
(21) Anmeldenummer: 11165151.9
(22) Anmeldetag: 12.06.2007
(51) Int. Cl.: A01N 25/02, A01N 25/04, A01N 25/30, A01N 57/20, A01P 13/00

(54) **Schaumarme Zubereitungen für den Pflanzenschutz**
Foam preparations for protecting plants
Préparations pauvres en mousse pour la protection des plantes

(30) Priorität: 21.06.2006 EP 06012771
(43) Veröffentlichungstag der Anmeldung: 21.09.2011
(62) Teilanmeldung aus: 07725966.1
(73) Patentinhaber: Bayer CropScience AG, 40789 Monheim (DE)
(72) Erfinder: Baur, Peter, Prof. Dr., 86938 Schondorf (DE); Giessler, Stephanie, 60529 Frankfurt am Main (DE); Auler, Thomas, 51465 Bergisch Gladbach (DE); Deckwer, Roland, Dr., 65929 Frankfurt am Main (DE)

(56) Entgegenhaltungen:
- EP-A1- 0 098 632
- EP-A1- 0 436 947
- EP-A2- 0 167 337
- WO-A1-01/09011
- WO-A1-02/07519
- WO-A2-00/65005
- WO-A2-2005/117583
- DE-A1- 2 743 607
- DE-A1- 2 810 998
- DE-A1- 3 726 094
- US-A1- 2003 212 195
- DATABASE WPI Week 198939 Thomson Scientific, London, GB; AN 1989-282477 XP002449832, & JP 1 207125 A (LION HYGIENE KK) 21. August 1989 (1989-08-21) -& DATABASE EPODOC [Online] EUROPEAN PATENT OFFICE, THE HAGUE, NL; XP002672254, -& JP 1 207125 A (LION HAIJIIN KK) 21. August 1989 (1989-08-21)
- DATABASE CA [Online] CHEMICAL ABSTRACTS SERVICE, COLUMBUS, OHIO, US; XP002449826, gefunden im STN-International accession no. 92:1662 -& JP 54 107525 A (KUMIAI CHEMICAL INDUSTRY CO) 23. August 1979 (1979-08-23) -& DATABASE WPI Week 197940 Thomson Scientific, London, GB; AN 1979-72498B XP002672255, -& JP 54 107525 A (KUMIAI CHEM IND CO LTD) 23. August 1979 (1979-08-23) -& DATABASE EPODOC [Online] EUROPEAN PATENT OFFICE, THE HAGUE, NL; XP002672256, & JP 54 107525 A (KUMIAI CHEMICAL INDUSTRY CO) 23. August 1979 (1979-08-23)
- DATABASE WPI Week 199402 Thomson Scientific, London, GB; AN 1994-013476 XP002449830, & JP 5 323523 A (MITSUBISHI PAPER MILLS LTD) 7. Dezember 1993 (1993-12-07) -& JP 5 323523 A (MITSUBISHI PAPER MILLS LTD) 7. Dezember 1993 (1993-12-07)
- DATABASE WPI Week 199420 Thomson Scientific, London, GB; AN 1994-164277 XP002449831, & JP 6 108092 A (LION CORP) 19. April 1994 (1994-04-19) -& JP 6 108092 A (LION CORP) 19. April 1994 (1994-04-19) -& DATABASE CA [Online] CHEMICAL ABSTRACTS SERVICE, COLUMBUS, OHIO, US; XP002672257, gefunden im STN-International accession no. 121:282704

## Beschreibung

Die Erfindung betrifft das technische Gebiet der Zubereitungen (Formulierungen) für Agrochemikalien, wie Wirkstoffe auf dem Pflanzenschutzgebiet (agrochemische Wirkstoffe, Dünger), speziell Formulierungen von wasserlöslichen oder teilweise wasserlöslichen Pflanzenschutzmittelwirkstoffen, insbesondere Formulierungen von salzartigen Pflanzenschutzmittelwirkstoffen, ganz besonders von Glufosinat-salzen wie Glufosinat-ammoniumsalz, nach ISO auch als Glufosinate-ammonium bezeichnet. Außerdem betrifft die Erfindung Mischungen von Adjuvantien, welche in Kombination mit den genannten Agrochemikalien und deren Formulierungen eingesetzt werden können.

Wäßrige Formulierungen von Glufosinate-ammonium sind beispielsweise bekannt aus EP-A-0048436, EP-A-00336151 und EP-A-1093722. Dabei werden bevorzugt Alkylethersulfate der Alkylkettenlängen C12-C16 mit 1 bis 10 Ethylenoxyeinheiten verwendet, die geeignet sind, die biologische Wirkung von Glufosinat bei der Applikation auf die grünen Teile von Pflanzen zu verstärken. Der genaue Wirkungsmechanismus der Alkylethersulfate ist dabei unbekannt. Andere Additive mit vergleichbaren Tensideigenschaften (Sprühnebelhaftung, Spreiten auf Zielpflanzen) einschließlich anderer anionischer Tenside führen zur Minderwirkung gegenüber den genannten Alkylethersulfaten. Auch Substanzen mit Lösungsmittelcharakter wie Polyetherglykole, Glyzerin, Mineralöle, Mineralölkonzentrate, Polymere, Puffer und andere Substanzen zeichnen sich nicht durch eine vergleichbare Wirkung aus.

Aufgrund der in den Formulierungen enthaltenen C₁₂-C₁₆-Alkylethersulfate des genannten Typs zeigen die Formulierungen bei der Verdünnung mit Wasser vor der Applikation und beim Versprühen während der Applikation ein ungünstiges Schaumverhalten, wenn keine Entschäumer zugesetzt werden.

Die Folgen sind dann oft ein Überlaufen der Spritzapparaturen, Verschmutzungen der Umwelt, unregelmäßige Spritzbeläge auf den Pflanzen und Rückstände von Pflanzenschutzmitteln in den Spritzapparaturen.

Gemäß EP-A-0407874 sind für wäßrige flüssige Pflanzenschutzmittel wirksame Entschäumer aus der Gruppe der Perfluoralkylphosphinsäuren oder -alkylphosphonsäuren vorgeschlagen worden. Derartige Entschäumer (z. B. ®Fluowet PP von Clariant) zeichnen sich durch eine hohe Entschäumerwirkung bei vergleichsweise niedriger Aufwandmenge aus, wobei die Entschäumerwirkung auch bei längerer Lagerung bei unterschiedlichen Temperaturen und bei mechanischer Beanspruchung der Formulierungen stabil bleibt. Darüber hinaus wird die biologische Wirksamkeit der formulierten Pflanzenschutzmittel durch den Gehalt an Entschäumer nicht beeinträchtigt.

Die bekannten fluorhaltigen Entschäumer sind jedoch nicht für alle Anwendungsgebiete gleichermaßen geeignet. Beispielsweise ist bei vielen derartigen Formulierungen die entschäumende Wirkung vom Härtegrad des Wassers (dem Gehalt an Calcium- und Magnesiumsalzen) abhängig, das für die Herstellung der Spritzbrühen verwendet wird. Nach allgemeinen ökotoxikologischen Erwägungen, ist es auch wünschenswert, die Verbreitung von fluorhaltigen Kohlenwasserstoffen in der Umwelt zu reduzieren.

WO2005117583 beschreibt Pflanzenschutzmittelformulierungen, die Alkylpolyglycolethersulfate enthalten. Spezifisch benannt ist Genapol LRO (C_{12/14}-(EO)₂-OSO₃Na).

Aus den genannten Gründen besteht ein Bedarf nach alternativen Lösungen, welche die Herstellung schaumarmer Formulierungen von Agrochemikalien, z. B. Pflanzenschutzmittelwirkstoffen wie Glufosinat oder Düngern, mit guten anwendungstechnischen Eigenschaften, beispielsweise guter Lagerstabilität und gleichmäßiger und hoher biologischer Wirksamkeit, ermöglichen.

Gegenstand der Erfindung sind schaumarme flüssige Adjuvantformulierungen, welche zur Herstellung der genannten konzentrierten agrochemischen Formulierungen, vorzugsweise Pflanzenschutzmittelformulierungen oder Düngemitteln, oder zur Herstellung von Tank-Mischungen mit Agrochemikalien, vorzugsweise Pflanzenschutzwirkstoffformulierungen oder Düngemitteln, verwendet werden können oder auch separat, gleichzeitig oder sequentiell mit der Applikation von Wirkstoffen (vorzugsweise den genannten Wirkstoffen (a)) auf die Pflanzen oder auf den Boden, auf oder in dem die Pflanzen heranwachsen, appliziert werden können.

Derartige Adjuvantformulierungen sind dadurch gekennzeichnet, dass sie
(c) 0,1 bis 99 Gew.-% Alkylethersulfate mit 1 bis 9 C-Atomen in der Alkylkette und 1 bis 20 Alkylenoxyeinheiten,
(d) 0 bis 30 Gew.-% anionaktive, nichtionogene, kationaktive und/oder zwitterionische Tenside,
(e) 0,1 bis 95 Gew.-% Wasser,
(f1) 0 bis 40 Gew.-% polare organische Lösungsmittel und
(f) 0 bis 15 Gew.-% weitere übliche Formulierungshilfsmittel enthalten,
wobei die Alkylethersulfate der Komponente (c) ausgewählt sind aus
2-Ethyl-hexyl-ethylenglykolethersulfat Natriumsalz,
2-Ethyl-hexyl-diethylenglykolethersulfat Natriumsalz,
2-Ethyl-hexyl-triethylenglykolethersulfat Natriumsalz,
2-Ethyl-hexyl-tetraethylenglykolethersulfat Natriumsalz,
2-Ethyl-hexyl-pentaethylenglykolethersulfat Natriumsalz,
2-Ethyl-hexyl-hexaethylenglykolethersulfat Natriumsalz,
2-Ethyl-hexyl-heptaethylenglykolethersulfat Natriumsalz,
2-Ethyl-hexyl-octaethylenglykolethersulfat Natriumsalz,
2-Ethyl-hexyl-nonaethylenglykolethersulfat Natriumsalz, und
2-Ethyl-hexyl-decaethylenglykolethersulfat Natriumsalz.

Die Alkylethersulfate stellen anionische Tenside dar. Das Gegenion in diesen anionischen Verbindungen ist Natrium.

Alkylethersulfate sind
2-Ethyl-hexyl-ethylenglykolethersulfat,
2-Ethyl-hexyl-diethylenglykolethersulfat,
2-Ethyl-hexyl-triethylenglykolethersulfat,
2-Ethyl-hexyl-tetraethylenglykolethersulfat,
2-Ethyl-hexyl-pentaethylenglykolethersulfat,
2-Ethyl-hexyl-hexaethylenglykolethersulfat,
2-Ethyl-hexyl-heptaethylenglykolethersulfat,
2-Ethyl-hexyl-octaethylenglykolethersulfat,
2-Ethyl-hexyl-nonaethylenglykolethersulfat,
2-Ethyl-hexyl-decaethylenglykolethersulfat,
wobei jeweils deren Salz das Natriumsalz ist.

Die Verbindungen sind neu und/oder können analog Verfahren hergestellt werden, wie sie für die Alkylethersulfate mit längeren Alkylketten bekannt sind. Die neuen Verbindungen der Komponente (c) sind daher ebenfalls Gegenstand der Erfindung.

Die Zubereitungen können als Komponente (d) gegebenenfalls anionaktive, nichtionogene, kationaktive und/oder zwitterionische Tenside, enthalten. Diese Verbindungen können helfen, die Grenzflächenaktivität auf ein gewünschtes Niveau anzuheben oder einzustellen, insbesondere wenn die verwendeten Alkylethersulfate sehr kurze Alkylreste enthalten.

Als Tenside für die Komponente (d) kommen beispielsweise folgende in Frage (wobei jeweils EO=Ethylenoxid-Einheiten, PO=Propylenoxid-Einheiten und BO=Butylenoxid-Einheiten von seiten der Herstellung bzw. entsprechende Alkylenoxy-Einheiten in den Tensidmolekülen bedeuten):
d1) Anionaktive Tenside wie beispielsweise:
   d1-1) Anionische Derivate von Fettalkoholen mit 10-24 Kohlenstoffatomen mit 0-60 EO und/oder 0-20 PO und/oder 0-15 BO in beliebiger Reihenfolge in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Marken, Hostaphat/Hordaphos^{®}-Marken von Clariant;
   d1-2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
   d1-3) anionische Derivate von Alkylenoxydaddukten von C₁ - C₉ Alkoholen in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis), soweit deren Strukturen nicht unter die Definition der Alkylethersulfate der Komponente (c) fallen;
   d1-4) anionische Derivate von Fettsäure-alkoxylaten in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
   Bevorzugte anionaktive Tenside sind
   Alkylpolyglykolethersulfate, insbesondere Fettalkoholdiethylenglykolethersulfat (z. B. Genapol LRO^{®}, Clariant), oder
   Alkylpolyglykolethercarboxylate (z. B. 2-(Isotridecyloxy-polyethylenoxy)-ethyl-carboxymethyl-ether, Marlowet 4538^{®}, Hüls),
   wobei der Gehalt und die Art der zusätzlichen anionischen Tenside zweckmäßig so gewählt wird, dass kein unakzeptables Schaumverhalten der Formulierung resultiert.
d2) Kationaktive oder zwitterionische Tenside wie beispielsweise:
   d2-1) Alkylenoxidaddukte von Fettaminen, quartäre Ammonium-Verbindungen mit 8 bis 22 Kohlenstoffatomen (C₈-C₂₂) wie z.B. die Genamin^{®} C-, L-, O-, T-Marken von Clariant;
   d2-2) oberflächenaktive, zwitterionische Verbindungen wie Tauride, Betaine und Sulfobetaine in Form von Tegotain^{®}-Marken von Goldschmidt, Hostapon^{®}T-und Arkopon^{®}T-Marken von Clariant.
d3) Nichtionogene Tenside wie beispielsweise:
   d3-1) Fettalkohole mit 8-24 Kohlenstoffatomen mit 0-60 EO und/oder 0-20 PO und/oder 0-15 BO in beliebiger Reihenfolge. Beispiele für derartige Verbindungen sind Genapol^{®}C-, L-, O-, T-, UD-, UDD-, X-Marken von Clariant, Plurafac^{®}- und Lutensol^{®}A-, AT-, ON-, TO-Marken von BASF, Marlipal^{®}24 und 013 Marken von Condea, Dehypon^{®}-Marken von Henkel, Ethylan^{®}-Marken von Akzo-Nobel wie Ethylan CD 120;
   d3-2) Fettsäure- und Triglyceridalkoxylate wie die Serdox^{®}NOG-Marken von Condea oder die Emulsogen^{®}-Marken von Clariant;
   d3-3) Fettsäureamidalkoxylate wie die Comperlan^{®}-Marken von Henkel oder die Amam^{®}-Marken von Rhodia;
   d3-4) Alkylenoxydaddukte von Alkindiolen wie die Surfynol^{®}-Marken von Air Products; Zuckerderivate wie Amino- und Amidozucker von Clariant;
   d3-5) Glukitole von Clariant;
   d3-6) oberflächenaktive Verbindungen auf Silikon- bzw Silanbasis wie die Tegopren^{®}-Marken von Goldschmidt und die SE^{®}-Marken von Wacker, sowie die Bevaloid^{®}- , Rhodorsil^{®}- und Silcolapse^{®}-Marken von Rhodia (Dow Corning, Reliance, GE, Bayer),
   d3-7) grenzflächenaktive Sulfonamide z.B. von Bayer;
   d3-8) grenzflächenaktive Polyacryl- und Polymethacrylderivate wie die Sokalan^{®}-Marken von der BASF;
   d3-9) oberflächenaktive Polyamide wie modifizierte Gelatine oder derivatisierte Polyasparginsäure von Bayer und deren Derivate,
   d3-10)tensidische Polyvinylverbindungen wie modifiziertes PVP wie die Luviskol^{®}-Marken von BASF und die Agrimer^{®}-Marken von ISP oder die derivatisierten Polyvinylacetate wie die Mowilith^{®}-Marken von Clariant oder die Polyvinylbutyrate wie die Lutonal^{®}-Marken von der BASF, die Vinnapas^{®}- und die Pioloform^{®}-Marken von Wacker oder modifizierten Polyvinylalkohole wie die Mowiol^{®}-Marken von Clariant,
   d3-11) oberflächenaktive Polymere auf Basis von Maleinsäureanhydrid und/oder Umsetzungsprodukten von Maleinsäureanhydrid sowie Maleinsäureanhydrid und/oder Umsetzungsprodukte von Maleinsäureanhydrid beinhaltende Copolymere wie die Agrimer^{®}-VEMA-Marken von ISP,
   d3-12) oberfächenaktive Derivate von Montan-, Polyethylen-, und Polypropylenwachsen wie die Hoechst^{®}-wachse oder die Licowet^{®}-Marken von Clariant,
   d3-13)Alkylenoxydaddukte auf Polyolbasis wie Polyglykol^{®}-Marken von Clariant,
   d3-14)grenzflächenaktive Polyglyceride und deren Derivate von Clariant.
   d3-15)Alkylpolysaccharide und deren Mischungen wie beispielsweise aus der ®Atplus-Reihe von Uniqema, vorzugsweise Atplus 435,
   d3-16)Alkylpolyglycoside in Form der APG^{®}-Marken von Henkel, beispielsweise ®Plantaren APG 225 (Fettalkohol C₈-C₁₀-Glucosid),
   d3-17)Sorbitanester in Form der Span^{®}- oder Tween^{®}-Marken von Uniqema,
   d3-18)Cyclodextrinester oder -ether von Wacker,
   d3-19)oberflächenaktive Cellulose- und Algin-, Pektin- und Guarderivate wie die Tylose^{®}-Marken von Clariant, die Manutex^{®}-Marken von Kelco und Guarderivate von Cesalpina,
   d3-20)Alkylpolyglykosid-Alkylpolysaccharid-Mischungen auf Basis C₈-C₁₀-Fettalkohol wie ®Glucopon 225 DK und ®Glucopon 215 CSUP (Cognis).

Die erfindungsgemäßen Zubereitungen enthalten als Komponente (e) Wasser. Bevorzugt sind wäßrige flüssige konzentrierte lagerfähige Formulierungen.

Die erfindungsgemäßen Zubereitungen enthalten als Komponente (f) gegebenenfalls weitere übliche Formulierungshilfsmittel, wie Lösungsmittel, Inertmaterialien, wie Haft-, Netz-, Dispergier-, Emulgier-, Penetrations-, Konservierungs- und Frostschutzmittel, Füll-, Träger- und Farbstoffe, Verdunstungshemmer und den pH-Wert (Puffer, Säuren und Basen) oder die Viskosität beeinflussende Mittel (z. B. Verdicker) und gegebenenfalls auch Entschäumer, wobei letztere allenfalls in reduzierter Menge.sinnvoll sind. Übliche Formulierungshilfsmittel (f) sind beispielsweise die genannten Inertmaterialien, Frostschutzmittel, Verdunstungshemmer, Konservierungsmittel, Farbstoffe, u. a.; bevorzugte Formulierungshilfsmittel (f) sind
◆ Frostschutzmittel und Verdunstungshemmer wie Glycerin oder Ethylenglykol, z.B. in einer Menge von 2 bis 10 Gew.-% und
◆ Konservierungsstoffe, z.B. Mergal K9N^{®} (Riedel) oder Cobate C^{®},

Möglich sind als Komponente (f) beispielsweise organische Lösungsmittel oder anorganische Lösungsmittel oder Gemische davon. In der Regel enthalten sie im Falle von flüssigen Zubereitungen Wasser (Komponente (e)) als Lösungsmittel. Für spezielle Anwendungen sind aber auch Stäubemittel oder Granulate möglich. Auch wasserfreie Zubereitungen auf Basis von organischen Lösungsmitteln wie unpolaren oder polaren organischen Lösungsmitteln kommen in Frage.

Beispiele für vergleichsweise unpolare Lösungsmittel im Sinne der Erfindung sind
◆ aliphatische oder aromatische Kohlenwasserstoffe, wie z.B. Mineralöle bzw. Toluol, Xylole und Naphthalinderivate,
◆ halogenierte aliphatische oder aromatische Kohlenwasserstoffe wie Methylenchlorid bzw. Chlorbenzol,
◆ Öle, z.B. auf pflanzlicher Basis wie Maiskeimöl und Rapsöl, oder Ölderivate wie Rapsölmethylester.

Im Zusammenhang mit der vorliegenden Erfindung bezeichnet der Begriff "polare organische Lösungsmittel" beispielsweise polare protische oder aprotische polare Lösungsmittel und deren Mischungen. Beispiele für polare Lösungsmittel im Sinne der Erfindung sind
◆ aliphatische Alkohole, wie z.B. niedere Alkanole wie Methanol, Ethanol, Propanol, Isopropanol und Butanol, oder mehrwertige Alkohole wie Ethylenglykol, Glycerin,
◆ polare Ether wie Tetrahydrofuran (THF), Dioxan, Alkylenglykolmonoalkyether und -dialkylether wie z.B. Propylenglykolmonomethylether, Propylenglykolmonoethylether, Ethylenglykolmonomethylether oder -monoethylether, Diglyme und Tetraglyme;
◆ Amide wie Dimethylformamid (DMF), Dimethylacetamid, Dimethylcaprylamid, Dimethylcaprinamid (^{®}Hallcomide) und N-Alkylpyrrolidone;
◆ Ketone wie Aceton;
◆ Ester auf Basis von Glycerin und Carbonsäuren wie Glycerinmono-, di- und triacetat,
◆ Lactame,
◆ Lactatester mit Kettenlängen von 1 bis 10 C-Atomen im Esterteil,
◆ Kohlensäurediester;
◆ Nitrile wie Acetonitril, Propionitril, Butyronitril und Benzonitril;
◆ Sulfoxide und Sulfone wie Dimethylsulfoxid (DMSO) und Sulfolan.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Im Falle einphasiger wäßrig-organischer Lösungen kommen die ganz oder weitgehend wassermischbaren Lösungsmittel oder Lösungsmittelgemische in Frage.

Bevorzugte organische Lösungsmittel im Sinne der vorliegenden Erfindung sind polare organische Lösungsmittel wie N-Methylpyrrolidon und Dowanol^{®} PM (Propylenglykol-monomethylether).

Die zur Herstellung der o.a. Formulierungen notwendigen Hilfsmittel wie insbesondere Tenside sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C. Hanser-Verlag, München, 4. Auflage 1986, und jeweils dort zitierte Literatur.

Gegenstand der Erfindung ist auch die Verwendung der Alkylethersulfate, gegebenenfalls in Kombination mit weiteren Tensiden, als schaumarme Additive zur Wirkungsverstärkung von Agrochemikalien, vorzugsweise Pflanzenschutzmittelwirkstoffen und/oder Düngern, welche wasserlöslich oder teilweise wasserlöslich sind, vorzugsweise der genannten Wirkstoffe (a). Dazu gehört die erfindungsgemäße Verwendung in Spritzbrühen oder in Zubereitungen, die zur Herstellung von Spritzbrühen bestimmt sind, wobei die Wirkstoffe in den Spritzbrühen vorzugsweise ganz oder teilweise wasserlöslich sind, d. h. in der Regel zu 1 bis 100 Gewichtsprozent, vorzugsweise 5 bis 100 Gewichtsprozent, weiter bevorzugt zu 10 bis 100 Gewichtsprozent, insbesondere zu 20 bis 100 Gewichtsprozent, ganz besonders zu 30 bis 100 Gewichtsprozent, bezogen auf das Gewicht des Wirkstoffs in der Spritzbrühe gelöst sind, und zwar vorzugsweise bei den praxisüblichen Konzentrationen der Wirkstoffe. Bevorzugt sind dabei die obengenannten Wirkstoffe (a) und die dazu bevorzugt genannten Wirkstoffe.

Die Verbindungen können dabei sowohl in Einzelformulierungen oder in Coformulierung von Wirkstoffen oder als Zusatz im Tank-mix-Verfahren verwendet werden.

Aufgrund ihrer oberflächenaktiven Eigenschaften beschleunigen die Alkylethersulfate (c) die Aufnahme der Wirkstoffe vom Typ a) und Typ b) in die Pflanze, insbesondere die Aufnahme über das Blatt der Pflanze, und tragen so zur besseren Wirkung der Wirkstoffe bei. Überraschenderweise ergeben die oberflächenaktiven Eigenschaften der erfindungsgemäß verwendeten Alkylethersulfate c) günstige Wirkungsverbesserungen bei wesentlich verringerter Schaumneigung der Zubereitungen oder Spritzbrühen.

Die Menge an Alkylethersulfat in den Zubereitungen wird zweckmäßig so gewählt, dass bei Zubereitung der Spritzbrühen eine nicht schäumende oder vergleichsweise wenig schäumende Spritzbrühe resultiert. Die Menge richtet sich im Allgemeinen nach der gewählten Kettenlänge im Alkylteil und der Anzahl der Alkylenoxy-einheiten bzw. der EO-Einheiten im Ethersulfat-teil.

Das Gewichtsverhältnis an Wirkstoff (a) (bezogen auf 100% Wirkstoff) zu Alkylethersulfat (c) (bezogen auf waschaktive Substanz) kann in weiten Bereichen variieren und ist vorzugsweise im Bereich von 1:0,1 bis 1:10, insbesondere 1:0,5 bis 1:5.

Mit Hilfe der Komponentenmischungen lassen sich konzentrierte schaumarme Zubereitungen, vorzugsweise konzentrierte schaumarme flüssige wäßrige Zubereitungen, von Agrochemikalien, vorzugsweise salzartigen Pflanzenschutzmittelwirkstoffen, wie Glufosinate-ammonium, herstellen, welche
(a) 1 bis 40 Gew.-%, vorzugsweise 2 bis 30 Gew.-%, insbesondere 5 bis 20 Gew.-%, in Wasser lösliche oder teilweise lösliche Agrochemikalien, vorzugsweise Pflanzenschutzmittelwirkstoffe oder Dünger, (Wirkstoffe vom Typ (a)),
(b) 0 bis 40 Gew.-%, vorzugsweise 0 bis 20 Gew.-%, insbesondere 0 bis 10 Gew.-% in Wasser unlösliche oder weitgehend unlösliche Agrochemikalien, vorzugsweise Pflanzenschutzmittelwirkstoffe oder Dünger, (Wirkstoffe vom Typ (b)),
(c) 0,1 bis 99 Gew.-%, vorzugsweise 1 bis 80 Gew.-%, insbesondere 2 bis 70 Gew.-%, ganz besonders 5 bis 60 Gew.-% Alkylethersulfate mit 1 bis 9 C-Atomen in der Alkylkette und 1 bis 20 Alkylenoxyeinheiten,
(d) 0 bis 25 Gew.-%, vorzugsweise 0 bis 20 Gew.-%, insbesondere 1 bis 20 Gew.-%, ganz besonders 3-15 Gew.-% anionaktive, nichtionogene, kationaktive und/oder zwitterionische Tenside,
(e) 0 bis 95 Gew.-%, vorzugsweise 0,1 bis 90 Gew.-%, weiter bevorzugt 5 bis 85 Gew.-% Wasser, insbesondere 10 bis 60 Gew.-% Wasser und
(f) 0 bis 50 Gew.-%, vorzugsweise 0 bis 20 Gew.-%, vorzugsweise 0 bis 15 Gew.-%, weitere übliche Formulierungshilfsmittel
enthalten.

"Gew-%" bedeutet dabei jeweils "Gewichtsprozent", d. h. das Verhältnis von Gewicht des Bestandteils und Gewicht der Zubereitung in Prozent. Bevorzugt sind auch Formulierungen, in denen der Gehalt der Komponenten aus einer Kombination von zwei oder mehreren der bevorzugt genannten Anteile der Komponenten besteht.

Die flüssigen Formulierungen können nach im Prinzip üblichen Verfahren hergestellt werden, d. h. durch Vermischen der Komponenten unter Rühren, Schütteln oder mittels statischer Mischverfahren. Die erhaltenen flüssigen Formulierungen sind stabil und gut lagerfähig.

Gegenstand der Erfindung sind schaumarme flüssige Adjuvantformulierungen, welche zur Herstellung der genannten konzentrierten agrochemischen Formulierungen, vorzugsweise Pflanzenschutzmittelformulierungen oder Düngemitteln, oder zur Herstellung von Tank-Mischungen mit Agrochemikalien, vorzugsweise Pflanzenschutzwirkstoffformulierungen oder Düngemitteln, verwendet werden können oder auch separat, gleichzeitig oder sequentiell mit der Applikation von Wirkstoffen (vorzugsweise den genannten Wirkstoffen (a)) auf die Pflanzen oder auf den Boden, auf oder in dem die Pflanzen heranwachsen, appliziert werden können.

Derartige Adjuvantformulierungen sind dadurch gekennzeichnet, dass sie
0,1 bis 99 Gew.-%, vorzugsweise 1 bis 80 Gew.-%, insbesondere 2 bis 70 Gew.-%, ganz besonders 5 bis 60 Gew.-% Alkylethersulfate mit 1 bis 9 C-Atomen in der Alkylkette und 1 bis 20 Alkylenoxyeinheiten,
(d) 0 bis 30 Gew.-%, insbesondere 1 bis 25 Gew.-%, ganz besonders 5-20 Gew.-% anionaktive, nichtionogene, kationaktive und/oder zwitterionische Tenside,
(e) 0,1 bis 95 Gew.-%, vorzugsweise 5 bis 90 % Wasser, vorzugsweise 10 bis 75 % Wasser,
(f1) 0 bis 40 Gew.-%, insbesondere 0 bis 30 Gew.-% polare organische Lösungsmittel und
(f) 0 bis 15 Gew.-%, weitere übliche Formulierungshilfsmittel. enthalten,
wobei die Alkylethersulfate der Komponente (c) ausgewählt sind aus
2-Ethyl-hexyl-ethylenglykolethersulfat Natriumsalz.
2-Ethyl-hexyl-diethylenglykolethersulfat Natriumsalz,
2-Ethyl-hexyl-triethylenglykolethersulfat Natriumsalz,
2-Ethyl-hexyl-tetraethylenglykolethersulfat Natriumsalz,
2-Ethyl-hexyl-pentaethylenglykolethersulfat Natriumsalz,
2-Ethyl-hexyl-hexaethylenglykolethersulfat Natriumsalz,
2-Ethyl-hexyl-heptaethylenglykolethersulfat Natriumsalz,
2-Ethyl-hexyl-octaethylenglykolethersulfat Natriumsalz,
2-Ethyl-hexyl-nonaethylenglykolethersulfat Natriumsalz, und
2-Ethyl-hexyl-decaethylenglykolethersulfat Natriumsalz.

Die flüssigen, Wirkstoff enthaltenden Formulierungen bzw. die Adjuvantformulierungen sind schaumarm und lagerfähig. Sie weisen in der Regel bei ihrer Anwendung vielfach sehr günstige technische Eigenschaften auf. Beispielsweise zeichnen sich die Formulierungen durch geringe Schaumneigung bei Verdünnen mit Wasser aus, z. B. bei der Herstellung von Tankmischungen oder bei der Anwendung der Formulierungen im Spritzverfahren. Die Formulierungen mit Wirkstoff bzw. die Adjuvantformulierungen weisen bei der Anwendung zusammen mit Wirkstoffen/Wirkstoffformulierungen außerdem eine vergleichsweise sehr gute biologische Wirkung aus, wenn man die Wirkung mit der Wirkung der bekannten Formulierungen mit langkettigen Alkylethersulfaten vergleicht.

Folglich eignen sich die erfindungsgemäßen Formulierungen in besonderem Maße zur Anwendung im Pflanzenschutz, bei dem die Formulierungen, gegebenenfalls nach Verdünnen mit Wasser, auf die Pflanzen, Pflanzenteile oder die Anbaufläche appliziert werden.

Im Falle von herbiziden Wirkstoffen (a) und/oder (b) eignen sich die Formulierungen sehr gut zur Bekämpfung unerwünschten Pflanzenwuchses sowohl im Nichtkulturland als auch in toleranten Kulturen.

Im Falle der Anwendung von selektiven Herbiziden als Wirkstoffe vom Typ a) oder von Insektiziden, Fungiziden oder Düngemitteln können die erfindungsgemäßen Zubereitungen als schaumarme und wirkungsstarke Formulierungen in den für die Wirkstoffe üblichen monokotylen und dikotylen Kulturen alleine oder in Kombination verwendet werden, beispielsweise in wirtschaftlich bedeutenden Kulturen wie Getreide (Weizen, Gerste, Triticale, Roggen, Reis, Mais, Hirse), Zuckerrübe, Zuckerrohr, Raps, Baumwolle, Sonnenblume, Erbsen, Bohnen und Soja. Von besonderem Interesse ist dabei die Anwendung in monokotylen Kulturen wie Getreide (Weizen, Gerste, Roggen, Triticale, Sorghum), inklusive Mais und Reis, und monokotylen Gemüsekulturen, aber auch in dikotylen Kulturen wie beispielsweise Soja, Raps, Baumwolle, Wein, Gemüsepflanzen, Obstpflanzen und Zierpflanzen.

Im Falle der bevorzugten Wirkstoffe a) können die Zubereitungen alleine oder in Kombination mit anderen Wirkstoffen a) und/oder Düngern im Nichtkulturland, Beeten von Nutz- und Zierpflanzen oder in geeigneten toleranten Kulturen verwendet werden. Dabei sind neben den erwähnten toleranten Nutzpflanzenkulturen, wie den ®LibertyLink oder ®Roundup-Ready-Kulturen, zur Produktion von Feldfrüchten auch Kulturen für Zier- und Nutzflächen, wie Rasen (turf) von Interesse. Beispielsweise eignen sich die erfindungsgemäßen Formulierungen mit Glufosinate(-ammonium) mit oder ohne Dünger für die Anwendung zur Bekämpfung von Schadpflanzen auf Zier- oder Nutzrasenflächen, speziell Weidelgras, Rispengras oder Bermudagras, vorzugsweise speziell in glufosinate-toleranten Rasenkulturen.

In den folgenden Beispielen beziehen sich Mengenangaben auf das Gewicht, sofern nichts anderes angegeben ist. Die Beispiele der Tabellen 1 und 2 betreffen erfindungsgemäße stabile Zusammensetzungen.

**Tabelle 1: Formulierungen (nicht erfindungsgemäß)**

| Beispiel Nr. | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Wirkstoff¹⁾ [Gew.-%] | 15 | 25 | 15 | 25 | 15 | 25 | 25 | 25 | 25 | 25 | 25 | 25 | 25 | 25 |
| AES (Typ²⁾) | C9 | C9 | C8 | C8 | C7 | C7 | C6 | C6 | C5 | C5 | C4 | C3 | C2 | C1 |
| AES [Gew.-%] | 40 | 30 | 40 | 30 | 40 | 30 | 30 | 40 | 30 | 40 | 40 | 40 | 40 | 40 |
| Netzmittel³⁾ [Gew.-%] | 0 | 0 | 0 | 0 | 0 | 0 | 5 | 0 | 5 | 5 | 5 | 5 | 5 | 5 |
| org. Lsgm.⁴⁾ | 10 | 15 | 10 | 15 | 10 | 15 | 10 | 10 | 10 | 10 | 10 | 10 | 10 | 10 |
| Wasser [Gew.-%] | 35 | 30 | 35 | 30 | 35 | 30 | 30 | 25 | 30 | 20 | 20 | 20 | 20 | 20 |

| | | | | | | | | | | | | | | |
|---|---|---|---|---|---|---|---|---|---|---|---|---|---|---|
| Abkürzungen in Tabelle 1 ¹⁾ "Wirkstoff" bezeichnet den Wirkstoff Glufosinate-ammonium; ²⁾ "AES" bedeutet ein Alkylether-sulfat, wobei "C9" die Alkylkette bezeichnet, d.h. "AES Typ C9" bezeichnet ein Nonylpolyethylenglykolethersulfat-gemisch mit 1 bis 10 EO; entsprechend bezeichnet "C8", "C7", "C6", "C5", "C4", "C3", "C2", "C1" das korrespondierende Octyl-, Heptyl-, Hexyl-, Pentyl-, Butyl-, Propyl-, Ethyl- bzw. Methylpolyglykolethersulfat; ³⁾ "Netzmittel" bezeichnet das nichtionogene Netzmittel Tridecylalkoholethoxylat mit 15 EO; vergleichbare Formulierungen werden erhalten, wenn das genannte nichtionogene Netzmittel durch andere nichtionogene Netzmittel wie Alkoholalkoxylate oder Alkylglycoside ersetzt wird; alternative Formulierungen werden erhalten, wenn als Netzmittel ionogene Netzmittel wie anionisches Dialkylsulfosuccucinat oder kationische Netzmittel wie Alkylaminalkoxylate verwendet werden; ⁴⁾ "org Lsgm" bezeichnet das organische Lösungsmittel Dowanol^{®} PM (Propylenglykol-monomethylether) | | | | | | | | | | | | | | |

**Tabelle 2: Formlierungen (nicht erfindungsgemäß)**

| Beispiel Nr. | | | | | | | | | | | | |
|---|---|---|---|---|---|---|---|---|---|---|---|---|
| | 15 | 16 | 17 | 18 | 19 | 20 | 21 | 22 | 23 | 24 | 25 | 26 |
| Wirkstoff¹⁾ [Gew.-%] | 5 | 5 | 10 | 10 | 33 | 1 | 1 | 10 | 10 | 1 | 5 | 10 |
| AES (Typ²⁾) | C9 | C9 | C9 | C9 | C9 | C6 | C6 | C6 | C6 | C4 | C4 | C4 |
| AES [Gew.-%] | 25 | 2,5 | 2 | 50 | 27 | 8 | 0,5 | 5 | 50 | 4 | 40 | 40 |
| Netzmittel³⁾ [Gew.-%] | 3 | 3 | 0 | 0 | 0 | 0 | 3 | 0 | 0 | 2 | 3 | 5 |
| org. Lsgm.⁴⁾ | 5 | 5 | 10 | 10 | 0 | 0 | 0 | 10 | 10 | 5 | 5 | 10 |
| Wasser [Gew.-%] | 62 | 84,5 | 78 | 40 | 30 | 91 | 95,5 | 75 | 30 | 88 | 50 | 35 |

| | | | | | | | | | | | | |
|---|---|---|---|---|---|---|---|---|---|---|---|---|
| Abkürzungen in Tabelle 2: siehe Abkürzungen zu Tabelle 1 | | | | | | | | | | | | |

### Schaumtest

Die jeweilige konzentrierte flüssige Pflanzenschutzformulierung aus Tabellen 1 und 2 wurde unter Rühren auf eine 1%ige Lösung verdünnt und das gebildete Schaumvolumen nach 1 min, 3 min und 12 min in ml Volumen bestimmt (siehe Schaumbeurteilung nach CIPAC MT 47.2). Alternativ dazu wurden die jeweiligen Additive allein bei 2 g/l gelöst und das gebildete Schaumvolumen nach 1 min, 3 min und 12 min in ml Volumen bestimmt.

Formulierungen mit Alklyethersulfaten aus Tabelle 1 und Tabelle 2 wiesen im Vergleich zu Formulierungen, worin die Alkylethersulfate durch C₁₂/C₁₄-Fettalkoholdiethylenglykolethersulfat ersetzt worden waren, eine wesentlich geringere Schaumbildung auf. Die Schaumbildung wurde praktisch verhindert, d. h. bei den Formulierungen aus Tabellen 1 und 2 trat bei der Mischung einer Menge von 0,2 bis 5 g/l Alklyethersulfat in Wasser nach 3min jeweils ein Schaumvolumen von weniger als 15ml und nach 12 min eine Schaumvolumen von 0 ml auf, während die Menge von 0,2 bis 5 g/l einer entsprechenden Formulierung mit C₁₂/C₁₄-Fettalkoholdiethylenglykolethersulfat als AES nach 3 min wie auch nach 10min ein maximales Schaumvolumen von 100 ml aufwies.
Das C₁₂/C₁₄-Fettalkoholdiethylenglykolethersulfat allein wies im Test bei 2 g/l auch nach 12min das maximale Schaumvolumen von 100 ml auf, während bei den Alkylethersulfaten aus Tabellen 1 bzw. 2 jeweils nach 12min ein Schaumvolumen von 0 ml und schon nach 3min weniger als 10ml Schaumvolumen gemessen wurde. Formulierungen mit C₁₂/C₁₄-Fettalkoholdiethylenglykolethersulfat und Entschäumern auf Siliconbasis (z. B. Rhodorsil®-Typen) wiesen in diesem Schaumtest nach 3min immer noch ein Schaumvolumen von 100 ml auf. Formulierungen mit den erfindungsgemäßen Alklyethersulfaten zeigten dagegen selbst ohne weiteren Zusatz von Entschäumern schon nach 3 min proktisch keine Schaumbildung mehr.

### Biologische Beispiele

### 1) Verwendung mit Glufosinate zur Unkrautkontrolle

Die Formulierungen gemäß Tabelle 1 wurden mit Wasser verdünnt und mit einer Wasseraufwandmenge von 200 I/ha auf Nichtkulturland appliziert, das ein unter natürlichen Bedingungen aufgelaufenes Spektrum von Schadpflanzen enthielt. Die Bewertung nach 4 Wochen ergab, daß die grünen Teile der Schadpflanzen abgestorben waren und somit eine gute Kontrolle der Schadpflanzen erreicht worden war.

### 2) Verwendung mit Glufosinate zur Unkrautkontrolle

Die Formulierungen gemäß Tabellen 1 und 2 wurden mit Wasser verdünnt, so dass eine Wasseraufwandmenge von 200-400 I/ha bei einer üblichen Aufwandmenge für Glufosinate (300-1000 g/ha) bei Applikation auf Nichtkulturland resultiert mit einem unter natürlichen Bedingungen aufgelaufenes Spektrum von mono- und dikotylen Schadpflanzen. Eine Bewertung der Wirkung nach 5 Wochen ergab, daß die grünen Teile der Schadpflanzen abgestorben waren und somit eine gute Kontrolle der Schadpflanzen erfolgte. Beispielsweise zeigten Formulierungen aus den Spalten 1 bis 8 der Tabelle 1 und den Spalten 1 bis 9 im Vergleich zu Formulierungen mit C₁₂/C₁₄-Fettalkoholdiethylenglykolethersulfat als AES bei gleichem Verhältnis an Glufosinate zu AES in der biologischen Wirkung vergleichbar gute Ergebnisse bei der Kontrolle von mono- und dikotylen Schadpflanzen.

### 3) Blattpenetration von wasserlöslichen Blattdüngern wie Harnstoff

Bei der Blattanwendung von Harnstoff (0.1 bis 2% in der Spritzbrühe) auf Blätter von monokotylen Kulturpflanzen wie Mais wie auch dikotylen Kulturpflanzen wie Apfel erhöhte sich die Geschwindigkeit der Blattaufnahme innerhalb einiger Tage bei Anwesenheit von 0.05 bis 1 % eines der erfindungsgemäßen Alklyethersulfate mindestens um das doppelte.

### 4) Aufnahme von Insektiziden

Bei der Blattanwendung von Chlornicotinyl-Insektiziden wie Imidacloprid wurde bei Verhältnissen von Imidacloprid zu Alkylethersulfat von 4:1 bis 1:4 z.B. bei der Blattpenetration von Apfel eine 2- bis 5-mal schnellere Aufnahme des Wirkstoffs im Vergleich zu Imidacloprid-Formulierungen ohne Alkylethersulfat (wie zum Beispiel ®Confidor SL200 oder SC350) erhalten.

## Patentansprüche

1. Flüssige Adjuvantformulierungen, **dadurch gekennzeichnet, dass** sie
(c) 0,1 bis 99 Gew.-% Alkylethersulfate mit 1 bis 9 C-Atomen in der Alkylkette und 1 bis 20 Alkylenoxyeinheiten,
(d) 0 bis 30 Gew.-% anionaktive, nichtionogene, kationaktive und/oder zwitterionische Tenside,
(e) 0,1 bis 95 Gew.-% Wasser,
(f1) 0 bis 40 Gew.-% polare organische Lösungsmittel und
(f) 0 bis 15 Gew.-% weitere übliche Formulierungshilfsmittel enthalten,
wobei die Alkylethersulfate der Komponente (c) ausgewählt sind aus
2-Ethyl-hexyl-ethylenglykolethersulfat Natriumsalz,
2-Ethyl-hexyl-diethylenglykolethersulfat Natriumsalz,
2-Ethyl-hexyl-triethylenglykolethersulfat Natriumsalz,
2-Ethyl-hexyl-tetraethylenglykolethersulfat Natriumsalz,
2-Ethyl-hexyl-pentaethylenglykolethersulfat Natriumsalz,
2-Ethyl-hexyl-hexaethylenglykolethersulfat Natriumsalz,
2-Ethyl-hexyl-heptaethylenglykolethersulfat Natriumsalz,
2-Ethyl-hexyl-octaethylenglykolethersulfat Natriumsalz,
2-Ethyl-hexyl-nonaethylenglykolethersulfat Natriumsalz, und
2-Ethyl-hexyl-decaethylenglykolethersulfat Natriumsalz.

2. Flüssige Adjuvantformulierungen nach Anspruch 1, **dadurch gekennzeichnet, dass** sie
(c) 1 bis 80 Gew.-% Alkylethersulfate mit 1 bis 9 C-Atomen in der Alkylkette und 1 bis 20 Alkylenoxyeinheiten,
(d) 1 bis 25 Gew.-% anionaktive, nichtionogene, kationaktive und/oder zwitterionische Tenside,
(e) 5 bis 90 Gew.-% Wasser, und
(f1) 0 bis 30 Gew.-% polare organische Lösungsmittel enthalten.

3. Flüssige Adjuvantformulierungen nach Anspruch 1 oder 2, **dadurch gekennzeichnet, dass** Komponente (c) 2-Ethyl-hexyl-tetraethylenglykolethersulfat Natriumsalz ist.

4. 2-Ethyl-hexyl-(poly)glykolethersulfat ausgewählt aus der Gruppe
2-Ethyl-hexyl-ethylenglykolethersulfat Natriumsalz,
2-Ethyl-hexyl-diethylenglykolethersulfat Natriumsalz,
2-Ethyl-hexyl-triethylenglykolethersulfat Natriumsalz,
2-Ethyl-hexyl-tetraethylenglykolethersulfat Natriumsalz,
2-Ethyl-hexyl-hexaethylenglykolethersulfat Natriumsalz,
2-Ethyl-hexyl-heptaethylenglykolethersulfat Natriumsalz,
2-Ethyl-hexyl-octaethylenglykolethersulfat Natriumsalz,
2-Ethyl-hexyl-nonaethylenglykolethersulfat Natriumsalz,
2-Ethyl-hexyl-decaethylenglykolethersulfat Natriumsalz.

5. 2-Ethyl-hexyl-tetraethylenglykolethersulfat Natriumsalz.

6. Verwendung von Adjuvantformulierungen nach einem der Ansprüche 1 bis 3 oder von 2-Ethyl-hexyl-(poly)glykolethersulfat Natriumsalzen gemäß Anspruch 4 oder 5 im Pflanzenschutz.

## Claims

1. Liquid adjuvant formulations, **characterized in that** they comprise
(c) from 0.1 to 99% by weight of alkyl ether sulphates having 1 to 9 carbon atoms in the alkyl chain and 1 to 20 alkyleneoxy units,
(d) from 0 to 30% by weight of anion-active, nonionogenic, cation-active and/or zwitterionic surfactants,
(e) from 0.1 to 95% by weight of water,
(f1) from 0 to 40% by weight of polar organic solvents and
(f) from 0 to 15% by weight of further customary formulation auxiliaries,
where the alkyl ether sulphates of component (c) are selected from
2-ethylhexyl ethylene glycol ether sulphate sodium salt,
2-ethylhexyl diethylene glycol ether sulphate sodium salt,
2-ethylhexyl triethylene glycol ether sulphate sodium salt,
2-ethylhexyl tetraethylene glycol ether sulphate sodium salt,
2-ethylhexyl pentaethylene glycol ether sulphate sodium salt,
2-ethylhexyl hexaethylene glycol ether sulphate sodium salt,
2-ethylhexyl heptaethylene glycol ether sulphate sodium salt,
2-ethylhexyl octaethylene glycol ether sulphate sodium salt,
2-ethylhexyl nonaethylene glycol ether sulphate sodium salt, and
2-ethylhexyl decaethylene glycol ether sulphate sodium salt.

2. Liquid adjuvant formulations according to Claim 1, **characterized in that** they comprise
(c) from 1 to 80% by weight of alkyl ether sulphates having 1 to 9 carbon atoms in the alkyl chain and 1 to 20 alkyleneoxy units,
(d) from 1 to 25% by weight of anion-active, nonionogenic, cation-active and/or zwitterionic surfactants,
(e) from 5 to 90% by weight of water, and
(f1) from 0 to 30% by weight of polar organic solvents.

3. Liquid adjuvant formulations according to Claim 1 or 2, **characterized in that**
component (c) is 2-ethylhexyl tetraethylene glycol ether sulphate sodium salt.

4. 2-Ethylhexyl (poly)glycol ether sulphate selected from the group
2-ethylhexyl ethylene glycol ether sulphate sodium salt,
2-ethylhexyl diethylene glycol ether sulphate sodium salt,
2-ethylhexyl triethylene glycol ether sulphate sodium salt,
2-ethylhexyl tetraethylene glycol ether sulphate sodium salt,
2-ethylhexyl hexaethylene glycol ether sulphate sodium salt,
2-ethylhexyl heptaethylene glycol ether sulphate sodium salt,
2-ethylhexyl octaethylene glycol ether sulphate sodium salt,
2-ethylhexyl nonaethylene glycol ether sulphate sodium salt, and
2-ethylhexyl decaethylene glycol ether sulphate sodium salt.

5. 2-Ethylhexyl tetraethylene glycol ether sulphate sodium salt.

6. Use of adjuvant formulations according to any of Claims 1 to 3 or of 2-ethylhexyl (poly)glycol ether sulphate sodium salts according to Claim 4 or 5 in crop protection.

## Revendications

1. Compositions liquides d'adjuvants, **caractérisées en ce qu'**elles contiennent (c) 0,1 à 99 % en poids d'alkyléthersulfates ayant de 1 à 9 atomes de carbone dans la chaîne alkyle et de 1 à 20 unités oxyde d'alkylène,
(d) 0 à 30 % en poids de tensioactifs anioniques, non ionogènes, cationiques et/ou zwitterioniques,
(e) 0,1 à 95 % en poids d'eau,
(f1) 0 à 40 % en poids de solvants organiques polaires et
(f) 0 à 15 % en poids d'autres adjuvants de formulation usuels,
les alkyléthersulfates du composant (c) étant choisis parmi
le 2-éthyl-hexyl-éthylèneglycoléthersulfate de sodium,
le 2-éthyl-hexyl-diéthylèneglycoléthersulfate de sodium,
le 2-éthyl-hexyl-triéthylèneglycoléthersulfate de sodium,
le 2-éthyl-hexyl-tétraéthylèneglycoléthersulfate de sodium,
le 2-éthyl-hexyl-pentaéthylèneglycoléthersulfate de sodium,
le 2-éthyl-hexyl-hexaéthylèneglycoléthersulfate de sodium,
le 2-éthyl-hexyl-heptaéthylèneglycoléthersulfate de sodium,
le 2-éthyl-hexyl-octaéthylèneglycoléthersulfate de sodium,
le 2-éthyl-hexyl-nonaéthylèneglycoléthersulfate de sodium,
le 2-éthyl-hexyl-décaéthylèneglycoléthersulfate de sodium.

2. Compositions liquides d'adjuvants selon la revendication 1, **caractérisées en ce qu'**elles contiennent
(c) 1 à 80 % en poids d'alkyléthersulfates ayant de 1 à 9 atomes de carbone dans la chaîne alkyle et de 1 à 20 unités oxyde d'alkylène,
(d) 1 à 25 % en poids de tensioactifs anioniques, non ionogènes, cationiques et/ou zwitterioniques,
(e) 5 à 90 % en poids d'eau, et
(f1) 0 à 30 % en poids de solvants organiques polaires.

3. Compositions liquides d'adjuvants selon la revendication 1 ou 2, **caractérisées en ce que** le composant (c) est le 2-éthyl-hexyl-tétraéthylèneglycoléthersulfate de sodium,

4. 2-éthyl-hexyl-(poly)glycoléthersulfate choisi dans le groupe
2-éthyl-hexyl-éthylèneglycoléthersulfate de sodium,
2-éthyl-hexyl-diéthylèneglycoléthersulfate de sodium,
2-éthyl-hexyl-triéthylèneglycoléthersulfate de sodium,
2-éthyl-hexyl-tétraéthylèneglycoléthersulfate de sodium,
2-éthyl-hexyl-hexaéthylèneglycoléthersulfate de sodium,
2-éthyl-hexyl-heptaéthylèneglycoléthersulfate de sodium,
2-éthyl-hexyl-octaéthylèneglycoléthersulfate de sodium,
2-éthyl-hexyl-nonaéthylèneglycoléthersulfate de sodium,
2-éthyl-hexyl-décaéthylèneglycoléthersulfate de sodium.

5. 2-éthyl-hexyl-tétraéthylèneglycoléthersulfate de sodium.

6. Utilisation de compositions d'adjuvants selon l'une quelconque des revendications 1 à 3 ou de 2-éthyl-hexyl-(poly)glycoléthersulfates de sodium selon la revendication 4 ou 5, dans la protection des plantes.
